# EUROPÄISCHE PATENTSCHRIFT

(11) **EP 2 961 028 B1**
(45) Veröffentlichungstag und Bekanntmachung des Hinweises auf die Patenterteilung: **14.02.2018**
(21) Anmeldenummer: 15173489.4
(22) Anmeldetag: 23.06.2015
(51) Int. Cl.: H02J 9/02, H02J 13/00

(54) **NOTBELEUCHTUNGSANLAGE UND VERFAHREN ZUM BETREIBEN DIESER NOTBELEUCHTUNGSANLAGE**
EMERGENCY LIGHTING SYSTEM AND METHOD FOR OPERATING THIS EMERGENCY LIGHTING SYSTEM
INSTALLATION D'ÉCLAIRAGE DE SECOURS ET PROCÉDÉ DE FONCTIONNEMENT D'UNE INSTALLATION D'ÉCLAIRAGE DE SECOURS

(30) Priorität: 23.06.2014 AT 504362014
(43) Veröffentlichungstag der Anmeldung: 30.12.2015
(73) Patentinhaber: DIN-Dietmar Nocker Facilitymanagement GmbH, 4030 Linz (AT)
(72) Erfinder: Nocker, Dietmar, Ing., 4531 Kematen an der Krems (AT)
(74) Vertreter: Jell, Friedrich

(56) Entgegenhaltungen:
- EP-A1- 2 573 630
- EP-A2- 1 724 903
- EP-A2- 2 557 657

## Beschreibung

Die Erfindung betrifft eine Notbeleuchtungsanlage für ein Gebäude mit mindestens einer Ersatzstromversorgung, mit wenigstens einer Steuereinrichtung, und mit mindestens einem in Abhängigkeit der Steuereinrichtung entweder mit der Ersatzstromversorgung oder einer Netzstromversorgung elektrisch verbindbaren Endstromkreis, an dessen elektrischen Versorgungsleitungen mehrere elektrische Verbraucher angeschlossen sind.

Um bei Rettungszeichenleuchten eines Endstromkreises einer Notbeleuchtungsanlage eine störungsfreie Energieversorgung sicherstellten zu können, ist es aus dem Stand der Technik (DE19807844A1) bekannt, mithilfe einer Steuereinrichtung zwischen einer Netzstromversorgung und einer zentralen Ersatzstromversorgung - meist batteriegepuffert - umzuschalten. Beim Evakuieren von Gebäuden ergaben sich jedoch selbst bei funktionierender Notbeleuchtungsanlage vermehrt Probleme in der Personenleitung. Diese lassen sich nicht zuletzt mit blindem Benutzervertrauen auf die Funktionstüchtigkeit mobiler Endgeräte begründen, unter anderem weil deren Datenverbindungen durch einen Zusammenbruch der netzstromversorgten elektronischen Infrastruktur des Gebäudes gestört bzw. durch Verbindungsprobleme zu Mobilfunknetzen unterbrochen wurde. Mit Personen, die sich in Hinblick auf Sicherheitsmaßnahmen falsch und/oder unkoordiniert verhalten, ist daher zu rechnen - womit sich in weiterer Folge eine erhöhte Problematik in der Gewährleistung der Personensicherheit ergibt.

Zudem ist es bei Notbeleuchtungsanlagen bekannt (DE102011109090A1), Ethernet als kabelgebundene Netzwerkstruktur zur Energie- und Datenversorgung von Rettungszeichenleuchten zu verwenden. Solch eine kabelgebundene Netzwerkstruktur kann auch einen Wireless Access Point aufweisen, um damit einen drahtlosen Datenzugang zur Zentrale der Notbeleuchtungsanlage zu schaffen. Einen genormten Endstromkreis für elektrische Verbraucher weist solch eine auf Ethernet basierende Notbeleuchtungsanlage nicht auf. EP 2 557 657 A2 weist die Merkmale des einleitenden Teils der unabhängigen Ansprüche 1 und 8 auf. Die Erfindung hat sich daher ausgehend vom eingangs geschilderten Stand der Technik die Aufgabe gestellt, eine Notbeleuchtungsanlage mit einem Endstromkreis derart konstruktiv zu verändern, dass trotz Störungen der elektrischen Energieversorgung des Gebäudes eine hohe Personensicherheit gewährleistet werden kann. Zudem soll zu diesem Zwecke ein verbessertes Verfahren zum Betrieb einer Notbeleuchtungsanlage geschaffen werden.

Die Erfindung löst die gestellte Aufgabe hinsichtlich der Notbeleuchtungsanlage dadurch, dass im Endstromkreis als einer der elektrischen Verbraucher mindestens ein Wireless Access Point zur Ausbildung einer kabellosen Netzwerkstruktur im Gebäude für wenigstens ein mobiles Endgerät vorgesehen ist. Die Erfindung ist in unabhängigen Ansprüchen 1 und 8 definiert. Ist im Endstromkreis als einer der elektrischen Verbraucher mindestens ein Wireless Access Point vorgesehen, kann die Funktionstüchtigkeit des Wireless Access Points zur Ausbildung einer kabellosen Netzwerkstruktur im Gebäude für wenigstens ein mobiles Endgerät stets sichergestellt werden. Der gegebenenfalls mit der Ersatzstromversorgung verbundene Endstromkreis kann nämlich den Wireless Access Point mit elektrischer Energie notversorgen, sodass die drahtlose Datenübertragung an mobile Endgeräte auch in Notsituationen gewährleistet werden kann - also selbst, wenn die Netzstromversorgung gestört ist. Empfangslücken in Mobilfunknetzen, wie diese in Gebäuden häufig auftreten, wirken sich daher nicht oder zumindest erheblich verringert auf die Zuverlässigkeit bzw. Funktion von mobilen Endgeräten aus, wodurch auch in solchen Situationen ein nachteiliges Personenverhalten vermieden werden kann. Die erfindungsgemäße Notbeleuchtungsanlage kann daher eine hohe Personensicherheit gewährleisten.

Weist die Notbeleuchtungsanlage eine Notlichtzentrale auf, die mit dem Wireless Access Point zur kabellosen Übertragung und/oder zum Empfang von auf das Gebäude bezogenen Daten an ein mobiles bzw. von einem mobilen Endgerät datenverbunden ist, kann diese Datenverbindung unter anderem auch zur Personenleitung aus Gefahrenzonen herangezogen werden - etwa indem Evakuierungsdaten übertragen werden. Weiter ist vorstellbar, auch Daten zu Ereignissen im Gebäude, zu Fluchtwegen oder zur Leitung von Einsatzkräften zu übertragen. All dies kann die Personensicherheit im Notfall noch weiter erhöhen und damit die erfindungsgemäße Notbeleuchtungsanlage auszeichnen.

Ein einfacher Kommunikationsstandard kann von der Notbeleuchtungsanlage zur Verfügung gestellt werden, wenn der Wireless Access Point die Netzwerkstruktur mit einem WLAN-Protokoll ausbildet.

Weist die Notbeleuchtungsanlage eine Verbindung mit dem Internet auf, wobei der Wireless Access Point einen WLAN-Hot Spot ausbildet, kann Personen selbst in Notfällen eine Informationsquelle über richtiges Verhalten zur Verfügung gestellt werden. Dies kann die Personensicherheit noch weiter verbessern.

Die Personensicherheit kann durch die Notbeleuchtungsanlage weiter erhöht werden, wenn mehrere Wireless Access Points eines oder mehrerer Endstromkreise miteinander kabelverbunden sind und gemeinsam eine kabellose Netzwerkstruktur ausbilden. Personen kann damit Räume übergreifend ein funktionstüchtiges kabelloses Netzwerk zur gebäudeweiten drahtlosen Datenübertragung zur Verfügung gestellt werden. Personen mit in dieses Netzwerk eingebundenen mobilen Endgeräten können dadurch unter anderem auch untereinander Daten und Informationen über den Notfall austauschen.

Die Sicherheit in einer Datenübertragung kann erhöht werden, wenn der Wireless Access Point für seine kabelgebundene Datenübertragung mit den elektrischen Versorgungsleitungen des Endstromkreises verbunden ist.

Vorzugsweise weist der Endstromkreis als elektrischen Verbraucher eine Rettungszeichenleuchte mit einem Wireless Access Point auf, um damit den Konstruktionsaufwand an der Notbeleuchtungsanlage weiter zu reduzieren.

Störungen mehrerer kabelloser Netzwerke im Gebäude untereinander können vermieden werden, wenn die Notbeleuchtungsanlage in Abhängigkeit einer Störung oder eines Ausfalls der Netzstromversorgung mit dem Wireless Access Point zu dessen Aktivierung verbunden ist. Der Wireless Access Point der Notbeleuchtungsanlage wird damit erst im Not- bzw. Evakuierungsfall aktiv, sodass keine nachteiligen Effekte auf andere im Gebäude bestehende kabellose Netzwerkstrukturen befürchtet werden müssen.

Hinsichtlich des Verfahrens löst die Erfindung die gestellte Aufgabe dadurch, dass der Endstromkreis mindestens einen Wireless Access Point mit elektrischer Energie versorgt, um damit bei einem Ausfall oder einer Störung der Netzstromversorgung eine kabellose Netzwerkstruktur im Gebäude für wenigstens ein mobiles Endgerät aufrechtzuerhalten.

Indem der Endstromkreis mindestens einen Wireless Access Point mit elektrischer Energie versorgt, kann ermöglicht werden, dass bei einem Ausfall oder einer Störung der Netzstromversorgung eine kabellose Netzwerkstruktur im Gebäude für wenigstens ein mobiles Endgerät aufrechterhalten werden kann, sodass eine drahtlose Datenübertragung an mobile Endgeräte auch in Notsituationen gewährleistbar ist. Ein in solchen Situationen nachteiliges Personenverhalten kann damit vermieden oder zumindest verringert werden, was eine sichere und gefahrenreduzierte Evakuierung von Personen aus dem Gebäude sicherstellen kann. Das erfindungsgemäße Verfahren kann daher zur Erhöhung der Personensicherheit beitragen.

Diese Personensicherheit kann weiter erhöht werden, wenn die Notbeleuchtungsanlage über die, vom Wireless Access Point ausgebildete kabellose Netzwerkstruktur auf das Gebäude bezogenen Daten an, insbesondere mobile, Endgeräte überträgt und/oder von diesen empfängt. Solche Daten können unter anderem Evakuierungsdaten, Daten zu Ereignissen im Gebäude, zu Fluchtwegen und/oder zur Leitung von Einsatzkräften darstellen.

Besonders geringen Einfluss auf eventuell bestehende Verbindungen, Netzwerkumgebungen etc. kann durch das Verfahren gewährleistet werden, wenn erst in Abhängigkeit einer Störung oder eines Ausfalls der Netzstromversorgung der Wireless Access Point eine kabellose Netzwerkstruktur im Gebäude ausbildet.

Das Verfahren kann benützerfreundlicher ausgebildet werden, wenn eine Anwendungssoftware auf einem, insbesondere mobilen, Endgerät in Abhängigkeit eines Ausfalls oder einer Störung einer anderen kabellosen Netzwerkstruktur mit dem Wireless Access Point der Notbeleuchtungsanlage verbindet. Ein Wechseln auf die kabellose Netzwerkstruktur der Notbeleuchtungsanlage kann damit automatisch erfolgen, was unter anderem deren Zuverlässigkeit und die Sicherheit bzw. Effektivität beim Evakuieren des Gebäudes erhöhen kann.

Die Abdeckung der kabellosen Netzwerkstruktur im Gebäude kann verbessert werden, wenn mehrere Wireless Access Points eines oder mehrerer Endstromkreise gemeinsam eine kabellose Netzwerkstruktur ausbilden. Außerdem kann damit der Zugriff auf die kabellose Netzwerkstruktur erleichtert werden. Zum Beispiel ist damit auch denkbar, kabellos auf die gesamte Netzwerkstruktur zuzugreifen, auch wenn kabelgebundene Datenverbindungen zur Notbeleuchtungsanlage ausgefallen sind.

Die Wireless Access Points können zudem zur Personenortung im Gebäude verwendet werden, indem in Abhängigkeit von bekannten Positionen der Wireless Access Points im Gebäude ein mit der kabellosen Netzwerkstruktur verbindbares mobiles Endgerät im Gebäude geortet wird. Dies kann unter anderem die Rettung von Personen aus dem Gebäude erleichtern.

Eine gegenüber Störungen besonders standfeste Notbeleuchtungsanlage kann ermöglicht werden, wenn die kabelgebundene Datenübertragung des Wireless Access Points über seine elektrische Versorgungsleitung des Endstromkreises erfolgt.

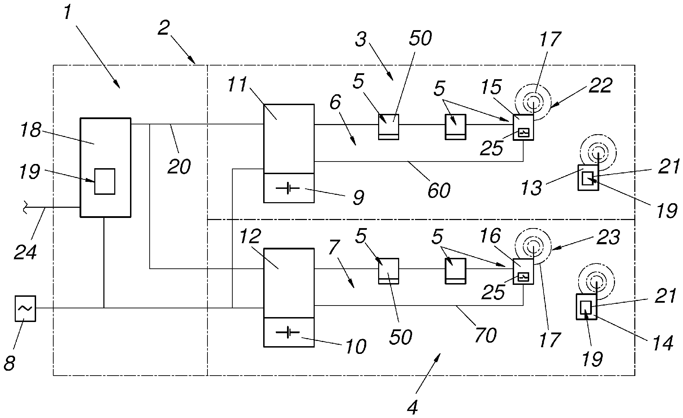

In der Zeichnung ist beispielsweise der Erfindungsgegenstand anhand einer Ausführungsvariante schematisch dargestellt.

Gemäß der dargestellten Figur wird ein schematischer Aufbau einer Notbeleuchtungsanlage 1 gezeigt, die in einem Gebäude 2 mit mehreren Räumen 3 und 4 installiert ist. Die Räume 3 und 4 sind mit einer Vielzahl von elektrische Verbrauchern 5, beispielsweise Rettungszeichenleuchten 50, versehen, die jeweils an einem Endstromkreis 6 bzw. 7 der Notbeleuchtungsanlage 1 angeschlossen sind. Die elektrische Energieversorgung der Endstromkreise 6, 7 wird durch eine Netzstromversorgung 8 bzw. durch die jeweiligen Ersatzstromversorgungen 9, 10 sichergestellt. Hierzu ist jedem Endstromkreis 6, 7 eine Steuereinrichtung 11, 12 zugeordnet, die in Abhängigkeit einer eventuellen Störung oder einem Ausfall der Netzstromversorgung 8, beispielsweise durch einen Brand, den jeweiligen Endstromkreis 6 bzw. 7 mit der Ersatzstromversorgung 9 bzw. 10 elektrisch verbindet. Die Versorgungsleitungen 60, 70 der Endstromkreise 6, 7 können somit stets elektrische Energie zu den elektrischen Verbrauchern 5 leiten - und damit die elektrische Energieversorgung beispielsweise von Rettungszeichenleuchten sicherzustellen. Im Allgemeinen wird erwähnt, dass anstelle von mehreren Ersatzstromversorgungen 9, 10 auch eine einzelne nicht näher dargestellte Ersatzstromversorgung für alle Endstromkreise 6, 7 vorstellbar ist. Des Weiteren ist es natürlich vorstellbar, dass separate Netzstromversorgungen für einzelne Endstromkreise vorgesehen sein können - und deren Ersatzstromversorgungen weitgehend voneinander unabhängig aktiviert werden.

Trotz funktionstüchtiger Notbeleuchtungsanlage 1 wurde in bestimmten Notsituationen vermehrt ein unvorteilhaftes Verhaltensmuster bei zu evakuierenden Personen festgestellt. Untersuchungen zeigten bei diesen Personen ein verändertes Verhaltensmuster, das auf eine Beeinträchtigung ihrer mobilen Endgeräte 13, 14 zurückgeführt werden konnte. Der Zusammenbruch der Netzstromversorgung im Gebäude 2 führte meist zu Unterbrechungen in der Daten- und Telefonverbindung mobiler Endgeräte, was sich in physischen und psychischen Belangen nachteilig auf die zu evakuierenden Personen auswirkt. Um diese Umstände zu vermeiden oder zumindest zu verringern und damit die von der Notbeleuchtungsanlage 1 gewährleistete Personensicherheit nicht zu gefährden, wird erfindungsgemäß in einem Endstromkreis 6, 7 - im Ausführungsbeispiel in beiden Endstromkreisen - als elektrischer Verbraucher 5 mindestens ein Wireless Access Point 15, 16 vorgesehen. Der Übersichtlichkeit halber nicht näher dargestellt, kann eine Rettungszeichenleuchte (50) einen Wireless Access Point (15, 16) selbst aufweisen - also in dieser integriert ist und deren Funktion ausübt. Die Wireless Access Points 15, 16 können somit im Montagebereich des Endstromkreises 6, 7 bzw. in den Räumen 3, 4 des Gebäudes 2 eine kabellose Netzwerkstruktur 17 ausbilden und sicherstellen, weil diese zumindest frei von Störungen in der Netzstromversorgung 8 sind. Daher ist selbst in einer Notsituation zum und/oder zwischen den mobilen Endgeräten 13, 14 eine Datenverbindung sichergestellt - auch wenn sich diese Endgeräte in Lücken von Mobilfunknetzen befinden, wie diese in einem Gebäude 2 oftmals bestehen. Nachteilige Reaktionen - beispielsweise im Evakuierungsfall-, basierend auf Verbindungsstörungen mobiler Endgeräte 13, 14 können damit vermieden werden. Die erfindungsgemäße Notbeleuchtungsanlage 1 ist damit in Ihrer Funktion in Bezug auf die Personensicherheit nicht beeinträchtigt, weil bei einem Ausfall der Netzstromversorgung 8 eine kabellose Netzwerkstruktur 17 im Gebäude 2 für mobile Endgeräte 13, 14 aufrechterhalten werden kann.

Im Allgemeinen wird erwähnt, dass mobile Endgeräte 13, 14 beispielsweise Mobiltelefone, tragbare Computer, Datenbrillen, Tablets, entsprechende Uhren etc. darstellen können.

Die kabelgebundene Datenübertragung bzw. Kommunikation zwischen den beiden Wireless Access Points 15, 16 wird über die Verkabelung der Notbeleuchtungsanlage 1 gewährleistet. Hierzu werden die elektrischen Versorgungsleitungen 60, 70 der Endstromkreise 3, 4 verwendet, an denen die beiden Wireless Access Point 15, 16 angeschlossen sind. Auch wird die zwischen den Steuereinrichtungen 11, 12 zur Notlichtzentrale 18 vorgesehene Verbindungsleitung 20 zur Datenübertragung zwischen den Endstromkreisen 3, 4 verwendet.

Wie der Figur weiter zu entnehmen, weist die Notbeleuchtungsanlage 1 in jedem Endstromkreis 3, 4 einen Wireless Access Point 15, 16 auf, um damit raumübergreifend im Gebäude 2 eine gemeinsame kabellose Netzwerkstruktur 17 auszubilden. Dies kann zudem die Rettung von Personen erleichtern. Über die bekannten Positionen der Wireless Access Points 15, 16 im Gebäude 2 und der bzw. die diesbezüglichen Verbindungen des jeweiligen mobilen Endgeräts 13 bzw. 14 mit dem oder den Wireless Access Points 15, 16 kann nämlich auf die exakte Position der Geräte 13 bzw. 14 im Gebäude rückgeschlossen werden. Rettungskräfte können damit im Gebäude 2 gezielt geleitet werden. Solche eine Ortung kann aber auch zur Überwachung der Bewegung von Personen im Gebäude 2 verwendet werden.

Besonders zeichnet sich die erfindungsgemäße Notbeleuchtungsanlage 1 in der Funktionalität einer Übermittlung von Evakuierungsdaten an die mobilen Endgeräte 13, 14 aus. Hierzu verbindet die Notlichtzentrale 18 mit den Wireless Access Points 15, 16 und überträgt die auf das Gebäude 2 bezogene Daten 19 auf die jeweilige Anzeige 21 der mobilen Endgeräte 13, 14. Damit kann eine besonders effektive Personenleitung durch die Notbeleuchtungsanlage 1 ermöglicht werden, was die Personensicherheit erheblich steigert, insbesondere wenn Evakuierungsdaten übertragen werden. Diese Übertragung kann auch von den mobilen Endgeräten 13, 14 zur Notlichtzentrale 18 erfolgen, um damit der Notbeleuchtungsanlage 1 Informationen über den Stand bzw. Probleme bei der Evakuierung der Personen Rückmeldung geben zu können. Auch können diese Daten 19 zu Ereignissen im Gebäude 2, beispielsweise Brandherde, Aufschluss geben bzw. über freie oder blockierte Fluchtwege Informationen enthalten. Diese Daten können unter anderem zur Leitung der Einsatzkräfte beitragen.

Die Wireless Access Points 15, 16 sind als WLAN-Access Points ausgebildet, um beim heutigen Standard der mobilen Endgeräte 13, 14 die Einwahl in die kabellose Netzwerkstruktur 17 zu erleichtern bzw. zu gestatten.

Indem die Notbeleuchtungsanlage 1 über seine Notlichtzentrale 18 eine Verbindung mit dem Internet 24 - über Ethernet - aufweist, können die beiden Wireless Access Points 15, 16 auch einen WLAN Hot Spot 22, 23 ausbilden, um damit die Datenversorgung mobiler Endgeräte 13 und 14 sicherzustellen.

Die Notbeleuchtungsanlage 1 weist zudem einen Schalter 25 auf. Mit diesem Schalter wird in Abhängigkeit einer Störung oder eines Ausfalls der Netzstromversorgung 8 der Wireless Access Point 15, 16 aktiviert. Damit kann ermöglicht werden, dass erst in einem Notfall die Wireless Access Points 15, 16 der Notbeleuchtungsanlage 1 aktiviert werden, um Störungen mit anderen nicht dargestellten kabellosen Netzwerkstrukturen zu vermeiden.

Im Allgemeinen wird erwähnt, dass das Protokoll der Wireless Access Points 15, 16 beispielsweise dem Standard IEEE 802.11 a, b, g bzw. h folgen kann.

## Patentansprüche

1. Notbeleuchtungsanlage (1) für ein Gebäude (2) mit einer Notlichtzentrale (18), mit mindestens einer Ersatzstromversorgung (9, 10), mit wenigstens einer Steuereinrichtung (11, 12), und mit mindestens einem in Abhängigkeit der Steuereinrichtung (11, 12) entweder mit der Ersatzstromversorgung (9, 10) oder einer Netzstromversorgung (8) elektrisch verbindbaren Endstromkreis (6, 7), an dessen elektrischen Versorgungsleitungen (60, 70) mehrere elektrische Verbraucher (5) angeschlossen sind, **dadurch gekennzeichnet, dass** im Endstromkreis (6, 7) als einer der elektrischen Verbraucher (5) mindestens ein Wireless Access Point (15, 16) zur Ausbildung einer kabellosen Netzwerkstruktur (17) im Gebäude (2) für wenigstens ein mobiles Endgerät (13, 14) vorgesehen ist, wobei die Notlichtzentrale (18) mit dem Wireless Access Point (15, 16) zur kabellosen Übertragung und/oder zum Empfang von auf das Gebäude (2) bezogenen Daten (19), beispielsweise Evakuierungsdaten, Daten zu Ereignissen im Gebäude (2), zu Fluchtwegen oder zur Leitung von Einsatzkräften, an ein mobiles bzw. von einem mobilen Endgerät (13, 14) datenverbunden ist.

2. Notbeleuchtungsanlage nach Anspruch 1, **dadurch gekennzeichnet, dass** der Wireless Access Point (15, 16) die Netzwerkstruktur (17) mit einem WLAN-Protokoll ausbildet.

3. Notbeleuchtungsanlage nach Anspruch 2, **dadurch gekennzeichnet, dass** die Notbeleuchtungsanlage (1) eine Verbindung mit dem Internet (24) aufweist, wobei der Wireless Access Point (15, 16) einen WLAN-Hot Spot (22, 23) ausbildet.

4. Notbeleuchtungsanlage nach einem der Ansprüche 1 bis 3, **dadurch gekennzeichnet, dass** mehrere Wireless Access Points (15, 16) eines oder mehrerer Endstromkreise (6, 7) miteinander kabelverbunden sind und gemeinsam eine kabellose Netzwerkstruktur (17) ausbilden.

5. Notbeleuchtungsanlage nach einem der Ansprüche 1 bis 4, **dadurch gekennzeichnet, dass** der Wireless Access Point (15, 16) für seine kabelgebundene Datenübertragung mit den elektrischen Versorgungsleitungen (60, 70) des Endstromkreises (6, 7) verbunden ist.

6. Notbeleuchtungsanlage nach einem der Ansprüche 1 bis 5, **dadurch gekennzeichnet, dass** der Endstromkreis (6, 7) als elektrischer Verbraucher (5) eine Rettungszeichenleuchte (50) mit einem Wireless Access Point (15, 16) aufweist.

7. Notbeleuchtungsanlage nach einem der Ansprüche 1 bis 6, **dadurch gekennzeichnet, dass** die Notbeleuchtungsanlage (1) in Abhängigkeit einer Störung oder eines Ausfalls der Netzstromversorgung (8) mit dem Wireless Access Point (15, 16) zu dessen Aktivierung verbunden ist.

8. Verfahren zum Betreiben einer Notbeleuchtungsanlage (1) eines Gebäudes (2), bei dem in Abhängigkeit einer Störung oder eines Ausfalls einer Netzstromversorgung (8) die elektrischen Verbraucher (5) mindestens eines Endstromkreises (6, 7) der Notbeleuchtungsanlage (1) von wenigstens einer Ersatzstromversorgung (9, 10) mit elektrischer Energie versorgt werden, **dadurch gekennzeichnet, dass** der Endstromkreis (6, 7) mindestens einen Wireless Access Point (15, 16) mit elektrischer Energie versorgt, um damit bei einem Ausfall oder einer Störung der Netzstromversorgung (8) eine kabellose Netzwerkstruktur (17) im Gebäude (2) für wenigstens ein mobiles Endgerät (13, 14) aufrechtzuerhalten, wobei die Notbeleuchtungsanlage (1) über die, vom Wireless Access Point (15, 16) ausgebildete kabellose Netzwerkstruktur (17) auf das Gebäude (2) bezogenen Daten (19), beispielsweise Evakuierungsdaten und/oder Daten zu Ereignissen im Gebäude (2), zu Fluchtwegen oder zur Leitung von Einsatzkräften, an, insbesondere mobile, Endgeräte (13, 14) überträgt und/oder von diesen empfängt.

9. Verfahren nach Anspruch 8, **dadurch gekennzeichnet, dass** in Abhängigkeit einer Störung oder eines Ausfalls der Netzstromversorgung (8) der Wireless Access Point (15, 16) eine kabellose Netzwerkstruktur (17) im Gebäude (2) ausbildet.

10. Verfahren nach Anspruch 8 oder 9, **dadurch gekennzeichnet, dass** eine Anwendungssoftware auf einem, insbesondere mobilen, Endgerät (13, 14) in Abhängigkeit eines Ausfalls oder einer Störung einer anderen kabellosen Netzwerkstruktur mit dem Wireless Access Point (15, 16) der kabellosen Netzwerkstruktur (17) der Notbeleuchtungsanlage (1) verbindet.

11. Verfahren nach einem der Ansprüche 8 bis 10, **dadurch gekennzeichnet, dass** mehrere Wireless Access Points (15, 16) eines oder mehrerer Endstromkreise (6, 7) gemeinsam eine kabellose Netzwerkstruktur (17) ausbilden.

12. Verfahren nach Anspruch 11, **dadurch gekennzeichnet, dass** in Abhängigkeit von bekannten Positionen der Wireless Access Points (15, 16) im Gebäude (2) ein mit der kabellosen Netzwerkstruktur (17) verbindbares mobiles Endgerät (13, 14) im Gebäude (2) geortet wird.

13. Verfahren nach einem der Ansprüche 8 bis 12, **dadurch gekennzeichnet, dass** die kabelgebundene Datenübertragung des Wireless Access Points (15, 16) über seine elektrische Versorgungsleitung (60, 70) des Endstromkreises (6, 7) erfolgt.

## Claims

1. Emergency lighting system (1) for a building (2) with an emergency lighting control centre (18), with at least one replacement power supply (9, 10), with at least one control device (11, 12), and with at least one final circuit (6, 7) depending on the control device (11, 12) and that may be connected electrically to either the replacement power supply (9, 10) or a mains power supply (8), to which final circuit (6, 7) electrical supply lines (60, 70) several electrical loads (5) are connected, **characterised in that**, in the final circuit (6, 7) as one of the electrical loads (5) at least one wireless access point (15, 16) is provided to form a wireless network structure (17) in the building (2) for at least one mobile terminal (13, 14), wherein the emergency lighting control centre (18) is data-bound to the wireless access point (15, 16) for the wireless transmission and/or reception of data (19) relating to the building (2) to or from a mobile terminal (13, 14), for example evacuation data, data on events in the building (2), on escape routes or to direct emergency services.

2. Emergency lighting system according to claim 1, **characterised in that** the wireless access point (15, 16) forms the network structure (17) with a WLAN protocol.

3. Emergency lighting system according to claim 2, **characterised in that** the emergency lighting system (1) exhibits a connection to the Internet (24), wherein the wireless access point (15, 16) forms a WLAN hot spot (22, 23).

4. Emergency lighting system according to any one of claims 1 to 3, **characterised in that** several wireless access points (15, 16) of one or more final circuits (6, 7) are interconnected by cable and jointly form a wireless network structure (17).

5. Emergency lighting system according to any one of claims 1 to 4, **characterised in that** the wireless access point (15, 16) is connected for its cable-bound data transmission to the electrical supply lines (60, 70) of the final circuit (6, 7).

6. Emergency lighting system according to one of claims 1 to 5, **characterised in that** the final circuit (6, 7) exhibits as an electrical load (5) an escape sign light (50) with a wireless access point (15, 16).

7. Emergency lighting system according to one of claims 1 to 6, **characterised in that** the emergency lighting system (1) is connected to the wireless access point (15, 16) to activate the same, depending on a fault or a failure of the mains power supply (8).

8. Method for operating an emergency lighting system (1) of a building (2) in which, depending on a fault or a failure of an emergency power supply (8), the electrical load (5) of at least one final circuit (6, 7) of the emergency lighting system (1) is supplied with electrical energy from at least one replacement power supply (9, 10), **characterised in that** the final circuit (6, 7) supplies at least one wireless access point (15, 16) with electrical energy, in order to maintain a wireless network structure (17) in the building (2) for at least one mobile terminal (13, 14) if there is a failure or fault with the mains power supply (8), wherein the emergency lighting system (1) transmits and/or receives data (19) relating to the building (2) to or from, more particularly mobile, terminals (13, 14) via the network structure (17) formed wirelessly by the wireless access point (15, 16), for example, evacuation data and/or data on events in the building (2), on escape routes or to direct emergency services.

9. Method according to claim 8, **characterised in that**, depending on a fault or a failure of the mains power supply (8), the wireless access point (15, 16) forms a wireless network structure (17) in the building (2).

10. Method according to claim 8 or 9, **characterised in that** a piece of application software on which a, more particularly mobile, terminal (13, 14) connects to the wireless access point (15, 16) of the wireless network structure (17) of the emergency lighting system (1), depending on a failure or fault of another wireless network structure.

11. Method according to any one of claims 8 to 10, **characterised in that** several wireless access points (15, 16) of one or more final circuits (6, 7) jointly form a wireless network structure (17).

12. Method according to claim 11, **characterised in that**, depending on the known positions of the wireless access points (15, 16) in the building (2), the location of a mobile terminal (13, 14) connected to the wireless network structure (17) is ascertained.

13. Method according to any one of claims 8 to 12, **characterised in that** the cable-bound transmission of the wireless access point (15, 16) is undertaken via its electrical supply line (60, 70) of the final circuit (6, 7).

## Revendications

1. Installation d'éclairage de secours (1) pour un bâtiment (2) doté d'une centrale d'éclairage de secours (18), avec au moins une alimentation en courant auxiliaire (9, 10), au moins un dispositif de commande (11, 12) et au moins un circuit électrique terminal (6, 7) connectable électriquement, en fonction du dispositif de commande (11, 12), soit à l'alimentation en courant auxiliaire (9, 10) soit à une alimentation en courant de réseau (8), auxquels câbles d'alimentation électriques (60, 70) sont raccordés plusieurs consommateurs électriques (5), **caractérisé en ce que**, dans le circuit électrique terminal (6, 7), au moins un point d'accès sans fil (15, 16) est prévu, en tant qu'un des consommateurs électriques (5), pour former une architecture de réseau (17) sans fil dans le bâtiment (2) pour au moins une borne mobile (13, 14), la centrale d'éclairage de secours (18) étant reliée en termes de données au point d'accès sans fil (15, 16) pour la transmission sans fil et/ou la réception de données (19) relatives au bâtiment (2), par exemple données d'évacuation, données au sujet d'événements dans le bâtiment (2), au sujet des issues de secours ou de guidage des forces d'intervention, à ou en provenance d'une borne mobile (13, 14).

2. Installation d'éclairage de secours selon la revendication 1, **caractérisé en ce que** le point d'accès sans fil (15, 16) forme l'architecture de réseau (17) avec un protocole WiFi.

3. Installation d'éclairage de secours selon la revendication 2, **caractérisé en ce que** l'installation d'éclairage de secours (1) présente une connexion à l'Internet (24), le point d'accès sans fil (15, 16) formant une borne WiFi (22, 23).

4. Installation d'éclairage de secours selon l'une quelconque des revendications 1 à 3, **caractérisé en ce que** plusieurs points d'accès sans fil (15, 16) d'un ou de plusieurs circuits électriques terminaux (6, 7) sont connectés les uns aux autres par fil et forment ensemble une architecture de réseau sans fil (17).

5. Installation d'éclairage de secours selon l'une quelconque des revendications 1 à 4, **caractérisé en ce que** le point d'accès sans fil (15, 16) est relié, pour sa transmission de données par fil, aux câbles d'alimentation électriques (60, 70) du circuit électrique terminal (6, 7).

6. Installation d'éclairage de secours selon l'une quelconque des revendications 1 à 5, **caractérisé en ce que** le circuit électrique terminal (6, 7) présente, en tant que consommateur électrique (5), une lampe de signal d'issue de secours (50) dotée d'un point d'accès sans fil (15, 16).

7. Installation d'éclairage de secours selon l'une quelconque des revendications 1 à 6, **caractérisé en ce que** l'installation d'éclairage de secours (1) est connectée, en fonction d'une perturbation ou d'une panne de l'alimentation électrique de réseau (8), au point d'accès sans fil (15, 16) pour activer celui-ci.

8. Procédé permettant de faire fonctionner une installation d'éclairage de secours (1) d'un bâtiment (2), dans lequel en fonction d'une perturbation ou d'une panne d'une alimentation électrique de réseau (8) les consommateurs électriques (5) d'au moins un circuit électrique terminal (6, 7) de l'installation d'éclairage de secours (1) sont alimentés en énergie électrique par au moins une alimentation en courant auxiliaire (9, 10), **caractérisé en ce que** le circuit électrique terminal (6, 7) alimente en énergie électrique au moins un point d'accès sans fil (15, 16) pour maintenir, en cas de panne ou de perturbation de l'alimentation en courant de réseau (8), une architecture de réseau sans fil (17) dans le bâtiment (2) pour au moins une borne mobile (13, 14), l'installation d'éclairage de secours (1) transmettant à des bornes (13, 14) notamment mobiles ou recevant de celles-ci, par le biais de l'architecture réseau (17) sans fil formée par le point d'accès sans fil (15, 16), des données (19) relatives au bâtiment (2), par exemple des données d'évacuation et/ou des données au sujet d'événements dans le bâtiment (2), des issues de secours ou de guidage de forces d'intervention.

9. Procédé selon la revendication 8, **caractérisé en ce que**, en fonction d'une perturbation ou d'une panne de l'alimentation en courant de réseau (8), le point d'accès sans fil (15, 16) forme une architecture réseau sans fil (17) dans le bâtiment (2).

10. Procédé selon la revendication 8 ou 9, **caractérisé en ce qu'**un logiciel d'application sur une borne notamment mobile (13, 14) connecte, en fonction d'une panne ou d'une perturbation d'une autre architecture de réseau sans fil, au point d'accès sans fil (15, 16) de l'architecture de réseau (17) sans fil de l'installation d'éclairage de secours (1).

11. Procédé selon l'une quelconque des revendications 8 à 10, **caractérisé en ce que** plusieurs points d'accès sans fil (15, 16) d'un ou de plusieurs circuits électriques terminaux (6, 7) forment ensemble une architecture de réseau sans fil (17).

12. Procédé selon la revendication 11, **caractérisé en ce que**, en fonction de positions connues du point d'accès sans fil (15, 16) dans le bâtiment (2), une borne mobile (13, 14) connectable à l'architecture de réseau sans fil (17) est localisée dans le bâtiment (2).

13. Procédé selon l'une quelconque des revendications 8 à 12, **caractérisé en ce que** la transmission de données par fil du point d'accès sans fil (15, 16) s'effectue par le biais de son câble d'alimentation électrique (60, 70) du circuit électrique terminal (6, 7).
